# EUROPEAN PATENT APPLICATION

(11) **EP 2 584 150 A2**
(43) Date of publication of application: **24.04.2013**
(21) Application number: 12188888.7
(22) Date of filing: 17.10.2012
(51) Int. Cl.: F01D 5/28

(54) **Components with laser cladding and methods of manufacture**

(30) Priority: 21.10.2011 US 201113278816
(71) Applicant: General Electric Company, Schenectady, NY 12345 (US)
(72) Inventor: Bunker, Ronald Scott, Niskayuna, NY New York 12309 (US); Pratt, Duncan, Niskayuna, 12309 (US)
(74) Representative: Cleary, Fidelma

(57) **Abstract**

A method of manufacture of a component is provided. The manufacturing method includes forming one or more grooves (132) in an outer surface (112) of a substrate (110). Each groove (132) has a base and an opening (136) and extends at least partially along the outer surface (112) of the substrate (110), where the substrate (110) has an inner surface that defines at least one hollow, interior space. The manufacturing method further includes using a laser cladding process to apply a laser clad material (190) over the opening (36) of the respective groove(s) (132), to at least partially define one or more channels (130) for cooling the component (100), and disposing a coating (56) over at least a portion of the outer surface (112) of the substrate (110) and over the laser clad material (190). Other manufacturing methods and a component (100) are also provided.

## Description

### BACKGROUND

The invention relates generally to gas turbine engines, and, more specifically, to micro-channel cooling therein.

In a gas turbine engine, air is pressurized in a compressor and mixed with fuel in a combustor for generating hot combustion gases. Energy is extracted from the gases in a high pressure turbine (HPT), which powers the compressor, and in a low pressure turbine (LPT), which powers a fan in a turbofan aircraft engine application, or powers an external shaft for marine and industrial applications.

Engine efficiency increases with temperature of combustion gases. However, the combustion gases heat the various components along their flowpath, which in turn requires cooling thereof to achieve a long engine lifetime. Typically, the hot gas path components are cooled by bleeding air from the compressor. This cooling process reduces engine efficiency, as the bled air is not used in the combustion process.

Gas turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined, and suitably cooled.

In all of these exemplary gas turbine engine components, thin walls of high strength superalloy metals are typically used to reduce component weight and minimize the need for cooling thereof. Various cooling circuits and features are tailored for these individual components in their corresponding environments in the engine. For example, a series of internal cooling passages, or serpentines, may be formed in a hot gas path component. A cooling fluid may be provided to the serpentines from a plenum, and the cooling fluid may flow through the passages, cooling the hot gas path component substrate and any associated coatings. However, this cooling strategy typically results in comparatively low heat transfer rates and non-uniform component temperature profiles.

Micro-channel cooling has the potential to significantly reduce cooling requirements by placing the cooling as close as possible to the heated region, thus reducing the temperature difference between the hot side and cold side of the main load bearing substrate material for a given heat transfer rate.

In addition to cooling networks, hot gas components are typically coated with various protective coatings to increase their service lifetime. For example, structural coatings, bond coats and thermal barrier coatings may be used to protect the component from thermal and mechanical stress. The initial structural coating may comprise thermal plasma spray or ion plasma deposited alloys. However, thermal spray coatings in particular are not fully dense and are not currently used to coat micro-cooling channels in turbine airfoils to completely bridge the channel opening, and thus pose a risk to durability.

It would therefore be desirable to provide a stronger cover material and process to improve the bond to the micro-channel cooled substrate.

### BRIEF DESCRIPTION

One aspect of the present invention resides in a method of manufacture that includes forming one or more grooves in an outer surface of a substrate. Each groove has a base and an opening and extends at least partially along the outer surface of the substrate. The substrate has an inner surface that defines at least one hollow, interior space. The manufacturing method further includes using a laser cladding process to apply a laser clad material over the opening of the respective groove(s), to at least partially define one or more channels for cooling the component, and disposing a coating over at least a portion of the outer surface of the substrate and over the laser clad material.

Another aspect of the invention resides in a method of manufacture that includes forming one or more grooves in an outer surface of a substrate. Each groove has an opening and extends at least partially along the outer surface of the substrate. The substrate has an inner surface that defines at least one hollow, interior space. The manufacturing method further includes processing the outer surface of the substrate to plastically deform the surface in a vicinity of a respective groove, such that the distance across the opening is reduced, and using a laser cladding process to apply a laser clad material over the opening of the respective one or more grooves, to at least partially define one or more channels for cooling the component. The manufacturing method further includes disposing a coating over at least a portion of the outer surface of the substrate and over the laser clad material.

Yet another aspect of the invention resides in a method of manufacture that includes depositing an inner layer of a structural coating on an outer surface of a substrate, forming one or more grooves at least partially in the inner structural coating. Each groove has an opening and extends at least partially along the component. The substrate has an inner surface that defines at least one hollow, interior space. The manufacturing method further includes using a laser cladding process to apply a laser clad material over the opening of the respective one or more grooves, to at least partially define one or more channels for cooling the component, and disposing an outer layer of the structural coating over at least a portion of the inner layer of the structural coating and over the laser clad material.

Another aspect of the invention resides in a component that includes a substrate having an outer surface and an inner surface, where the inner surface defines at least one hollow, interior space. The component further includes at least one coating disposed over at least a portion of the surface of the substrate. The coating comprises an inner structural coating layer disposed on the outer surface of the substrate. One or more grooves are formed at least partially in the inner structural coating layer. Each groove extends at least partially along the component and has an opening. One or more access holes are formed through the base of a respective groove, to connect the groove in fluid communication with the respective hollow interior space. A laser clad material disposed over the opening of the respective one or more grooves to at least partially define one or more channels for cooling the component.

### DRAWINGS

Embodiments of the present invention will now be described, by way of example only, with reference to the accompanying drawings in which:
FIG. 1 is a schematic illustration of a gas turbine system;
FIG. 2 is a schematic cross-section of an example airfoil configuration with cooling channels, in accordance with aspects of the present invention;
FIG. 3 is a schematic cross-section of a portion of a cooling circuit with re-entrant shaped cooling channels and with laser clad material disposed over the openings of the cooling channels;
FIG. 4 schematically depicts, in perspective view, three example micro-channels that extend partially along the surface of the substrate and channel coolant to respective film cooling holes, where laser clad material is disposed over the openings of the cooling channels;
FIG. 5 is a cross-sectional view of one of the example micro-channels of FIG. 4 and shows the micro-channel conveying coolant from an access hole to a film cooling hole;
FIG. 6 schematically depicts an example tooling path for forming a groove and a tapered, run-out region at the discharge end of the groove;
FIG. 7 is an enlarged view of one of the channels in FIG. 3 showing the laser clad material deposited across the opening of a re-entrant shaped groove;
FIG. 8 illustrates an angled application of a laser clad material;
FIG. 9 shows a laser clad material that does not completely seal the opening of the groove;
FIG. 10 schematically depicts an example re-entrant shaped cooling channel prior to a post-machining surface treatment and prior to laser cladding;
FIG. 11 schematically depicts the re-entrant shaped cooling channel of FIG. 10 after a post-machining surface treatment that introduces irregularities in the treated surface and prior to laser cladding;
FIG. 12 is a cross-sectional view of an example re-entrant shaped cooling channel with an opening size D₁ prior to a post-machining surface treatment;
FIG. 13 is a cross-sectional view of the re-entrant shaped cooling channel of FIG. 12 with the opening size reduced to D₂ after a post-machining surface treatment;
FIG. 14 shows a re-entrant shaped channel with laser clad material sealing the channel and with structural, bond, and thermal barrier coatings disposed over the laser clad material;
FIG. 15 shows a laser clad material that has been deposited over the opening of a groove, where the surface of the substrate has been faceted in the vicinity of the edges of the groove; and
FIG. 16 shows re-entrant shaped channels partially sealed by laser clad material, where the channels are formed in an inner layer of a structural coating, and where porous slots extend through an outer layer of a structural coating.

### DETAILED DESCRIPTION

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). In addition, the term "combination" is inclusive of blends, mixtures, alloys, reaction products, and the like.

Moreover, in this specification, the suffix "(s)" is usually intended to include both the singular and the plural of the term that it modifies, thereby including one or more of that term (e.g., "the passage hole" may include one or more passage holes, unless otherwise specified). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. Similarly, reference to "a particular configuration" means that a particular element (e.g., feature, structure, and/or characteristic) described in connection with the configuration is included in at least one configuration described herein, and may or may not be present in other configurations. In addition, it is to be understood that the described inventive features may be combined in any suitable manner in the various embodiments and configurations.

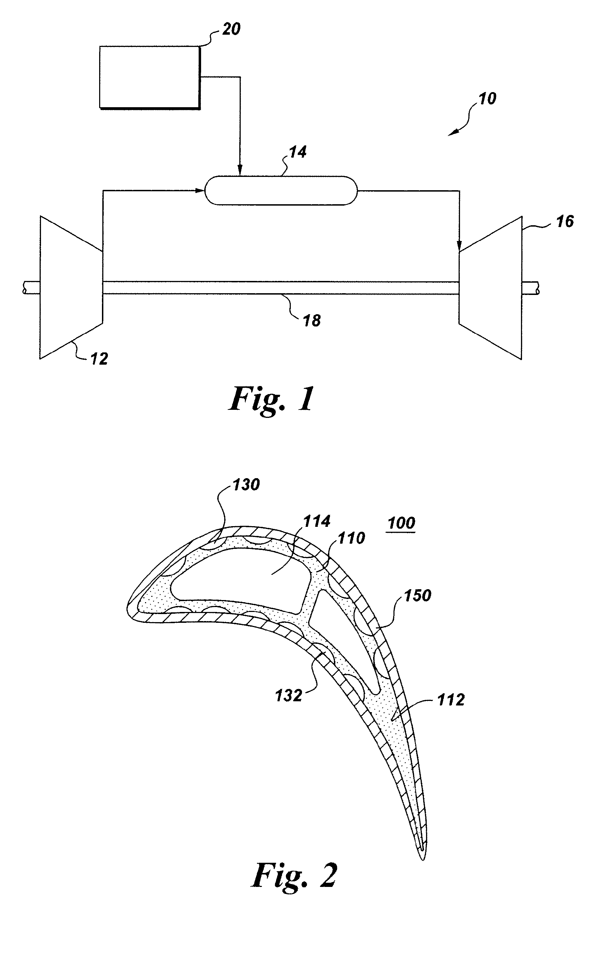

FIG. 1 is a schematic diagram of a gas turbine system 10. The system 10 may include one or more compressors 12, combustors 14, turbines 16, and fuel nozzles 20. The compressor 12 and turbine 16 may be coupled by one or more shaft 18. The shaft 18 may be a single shaft or multiple shaft segments coupled together to form shaft 18.

The gas turbine system 10 may include a number of hot gas path components 100. A hot gas path component is any component of the system 10 that is at least partially exposed to a high temperature flow of gas through the system 10. For example, bucket assemblies (also known as blades or blade assemblies), nozzle assemblies (also known as vanes or vane assemblies), shroud assemblies, transition pieces, retaining rings, and compressor exhaust components are all hot gas path components. However, it should be understood that the hot gas path component 100 of the present invention is not limited to the above examples, but may be any component that is at least partially exposed to a high temperature flow of gas. Further, it should be understood that the hot gas path component 100 of the present disclosure is not limited to components in gas turbine systems 10, but may be any piece of machinery or component thereof that may be exposed to high temperature flows.

When a hot gas path component 100 is exposed to a hot gas flow, the hot gas path component 100 is heated by the hot gas flow and may reach a temperature at which the hot gas path component 100 is substantially degraded or fails. Thus, in order to allow system 10 to operate with hot gas flow at a high temperature, increasing the efficiency, performance and/or life of the system 10, a cooling system for the hot gas path component 100 is required.

In general, the cooling system of the present disclosure includes a series of small channels, or micro-channels, formed in the surface of the hot gas path component 100. For industrial sized power generating turbine components, "small" or "micro" channel dimensions would encompass approximate depths and widths in the range of 0.25 mm to 1.5 mm, while for aviation sized turbine components channel dimensions would encompass approximate depths and widths in the range of 0.1 mm to 0.5 mm. The hot gas path component may be provided with a protective coating. A cooling fluid may be provided to the channels from a plenum, and the cooling fluid may flow through the channels, cooling the hot gas path component.

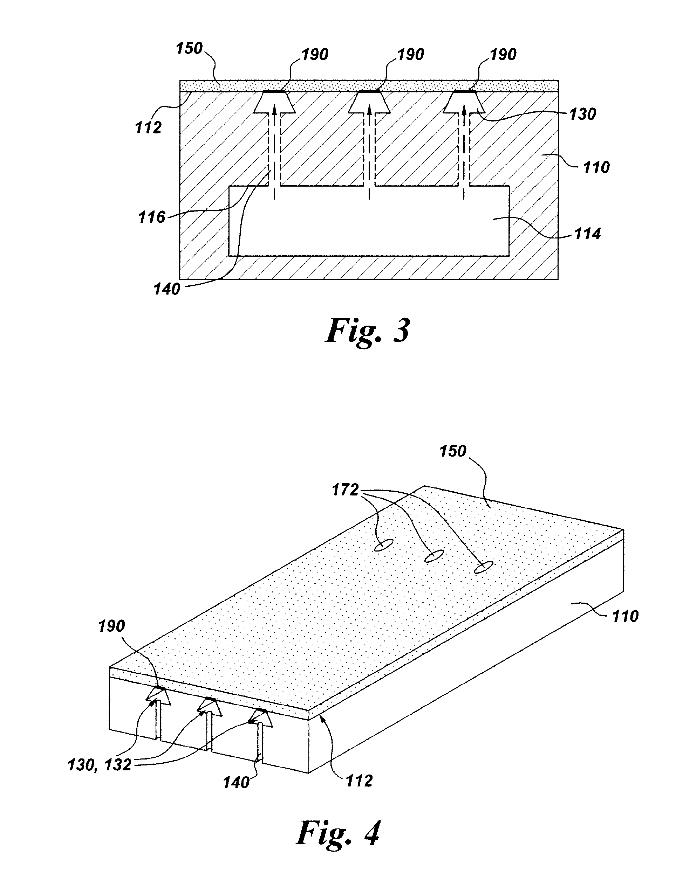

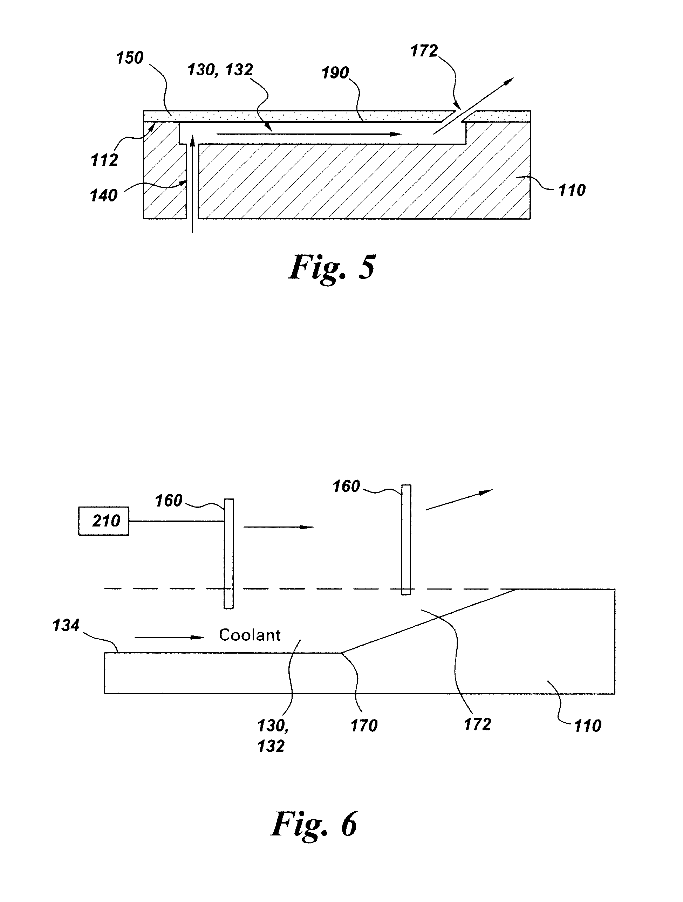

A manufacturing method is described with reference to FIGS. 2-9, 14. As indicated for example in FIGS. 2 and 6, the manufacturing method includes using an abrasive liquid jet 160 to form one or more grooves 132 in an outer surface 112 of a substrate 110. As indicated, for example, in FIGS. 4 and 5 each groove 132 has a base 134 and an opening 136 and extends at least partially along the outer surface 112 of the substrate 110. As shown in FIG. 2, the substrate 110 has an inner surface 116 that defines at least one hollow, interior space 114.

The substrate 110 is typically cast prior to forming the groove(s) 132. As discussed in US Patent No. 5,626,462, Melvin R. Jackson et al., "Double-wall airfoil," which is incorporated herein in its entirety, substrate 110 may be formed from any suitable material. Depending on the intended application for component 100, this could include Ni-base, Co-base and Fe-base superalloys. The Ni-base superalloys may be those containing both γ and γ' phases, particularly those Ni-base superalloys containing both γ and γ' phases wherein the γ' phase occupies at least 40% by volume of the superalloy. Such alloys are known to be advantageous because of a combination of desirable properties including high temperature strength and high temperature creep resistance. The substrate material may also comprise a NiAl intermetallic alloy, as these alloys are also known to possess a combination of superior properties including high temperature strength and high temperature creep resistance that are advantageous for use in turbine engine applications used for aircraft. In the case of Nb-base alloys, coated Nb-base alloys having superior oxidation resistance will be preferred, particularly those alloys comprising Nb-(27-40)Ti-(4.5-10.5)Al-(4.5-7.9)Cr-(1.5-5.5)Hf-(0-6)V, where the composition ranges are in atom per cent. The substrate material may also comprise a Nb-base alloy that contains at least one secondary phase, such as a Nb-containing intermetallic compound comprising a silicide, carbide or boride. Such alloys are composites of a ductile phase (i.e., the Nb-base alloy) and a strengthening phase (i.e., a Nb-containing intermetallic compound). For other arrangements, the substrate material comprises a molybdenum based alloy, such as alloys based on molybdenum (solid solution) with Mo₅SiB₂ and Mo₃Si second phases. For other configurations, the substrate material comprises a ceramic matrix composite, such as a silicon carbide (SiC) matrix reinforced with SiC fibers. For other configurations the substrate material comprises a TiAl-based intermetallic compound.

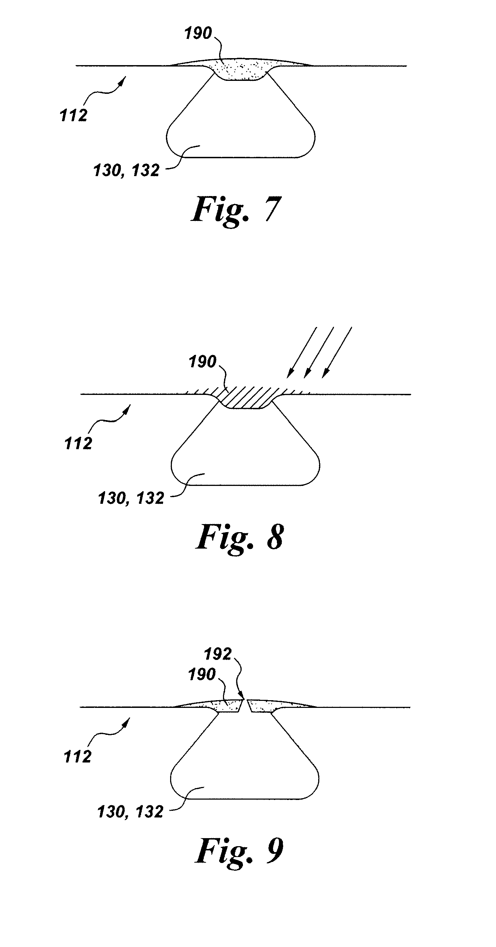

Referring now to FIGS. 7-9, the manufacturing method further includes using a laser cladding process to apply a laser clad material 190 over the opening 136 of the respective one or more grooves 132, to at least partially define one or more channels 130 for cooling the component 100. During the laser cladding process, a powdered or solid (for example, wire, tape or foil) feedstock material is melted and consolidated by use of a laser, to deposit the laser clad material 190 over the opening 136. The laser clad material 190 may be metallurgically bonded to the substrate 110. Laser consolidation is described in commonly assigned US Patent Application Publication 2008/0135530, Ching-Pang Lee et al., "Method of modifying the end wall contour in a turbine using laser consolidation and the turbines derived therefrom," which is incorporated herein in its entirety.

For certain configurations, the substrate 110 and the laser clad material 190 comprise the same material. For example, the substrate 110 may comprise a first material, and the laser clad material 190 may be applied by applying a laser to the first material in a powdered form. For these configurations, the first material may comprise one of a number of nickel-based, cobalt-based alloys, or iron base alloys, including without limitations nickel-base, cobalt-base and iron-base superalloys, as described above with reference to US Patent No. 5,626,462, Melvin R. Jackson et al.

For other configurations, the substrate 110 and the laser clad material 190 may comprise different but compatible materials, such that the laser clad material will bond well with the substrate material. For example the substrate 110 may comprise a first material, and the laser clad material 190 may be applied by applying a laser to a second material in a powdered form, where the first and second materials are different materials and where the laser clad material (second material) is a compatible material that will bond well with the substrate material (first material). The first and second materials may be selected from a number of nickel-based, cobalt-based alloys, or iron base alloys, including without limitations nickel-base, cobalt-base and iron-base superalloys, as described above with reference to US Patent No. 5,626,462, Melvin R. Jackson et al. For particular configurations, the second material may comprise the material used for the structural coating 150.

Beneficially, laser cladding is a programmable process that can be achieved using the same part datum as used to form the micro-channels. The applied laser clad material may comprise a fully dense material, more akin to welding than to a conventional coating, and may be metallurgically bonded to the substrate. The laser cladding process can taper the layer thickness away on each side of the channel thereby leaving a gradual rise and fall of thickness that further coatings can accommodate without generating flaws. The size of the top opening must be small enough, for example 25 mils or less and preferably 15 mils or less, such that the laser clad process can build up material from each side of the channel to meet in the middle. Some material may be allowed to hang down inside the opening. FIG. 8 illustrates an angled application of a laser clad material. Beneficially, applying the laser cladding at some angle to the surface, or at opposing angles on each side of the channel to be covered, can aid in building the bridge from each side.

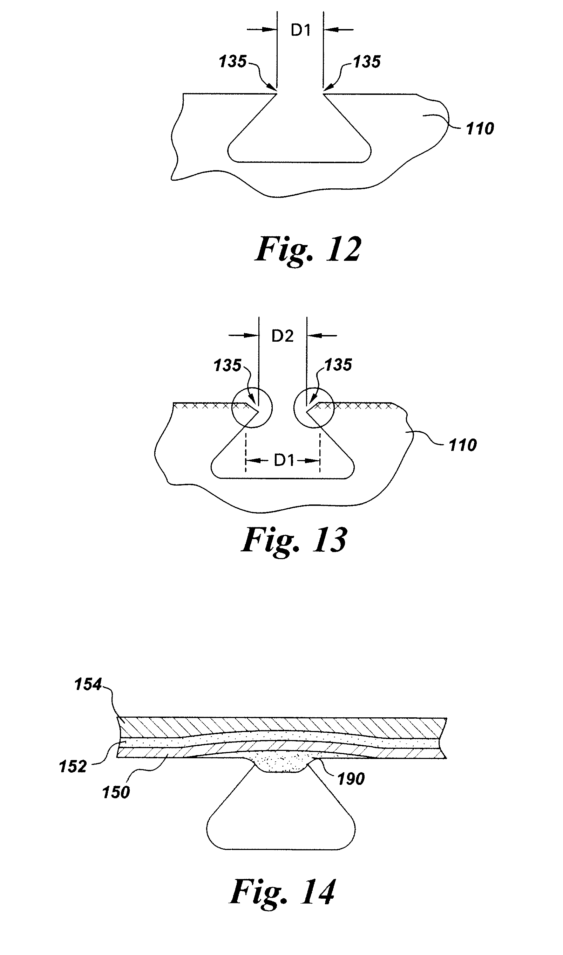

For particular processes, the laser cladding is used to apply a relatively thin layer, for example less than five mils, and more particularly in a range of about one to three mils in thickness (not including any material inside the neck of the opening). As indicated, for example, in FIG. 14, the normal coating system is then applied over this fully dense, metallurgically bonded, local cladding, which given the typical total coating system stack-up will largely mute the presence of the initial laser clad thickness in the final external surface topography.

For the arrangement shown in FIG. 7, the laser clad material 190 seals the opening 136. Beneficially, this facilitates depositing the structural coating 150 without the use of a sacrificial filler (not shown). For the arrangement shown in FIG. 9, the laser clad material 190 does not completely seal the opening 136. Rather, a gap 192 extends through the laser clad material 190. However, the gap 192 is far smaller than the opening 136 of the groove 132, such that laser clad material 190 that is anchored to each side of the opening 136 still facilitates the deposition of the structural coating 150 without the use of a sacrificial filler (not shown), by forming a partial cover with some minor residual gap near the middle for the structural coating to bridge over.

Referring now to FIGS. 4, 5 and 14, the manufacturing method further includes disposing a coating 150 over at least a portion of the outer surface 112 of the substrate 110 and over the laser clad material 190. Coating 150 comprises a suitable material and is bonded to the component.

For particular configurations, the coating 150 has a thickness in the range of 0.1-2.0 millimeters, and more particularly, in the range of 0.2 to 1 millimeter, and still more particularly 0.2 to 0.5 millimeters for industrial components. For aviation components, this range is typically 0.1 to 0.25 millimeters. However, other thicknesses may be utilized depending on the requirements for a particular component 100.

The coating 150 comprises structural coating layers and may further include optional additional coating layer(s). The coating layer(s) may be deposited using a variety of techniques. For particular processes, the structural coating layer(s) are deposited by performing an ion plasma deposition (cathodic arc). Example ion plasma deposition apparatus and method are provided in commonly assigned, US Published Patent Application No. 10080138529, Weaver et al, "Method and apparatus for cathodic arc ion plasma deposition," which is incorporated by reference herein in its entirety. Briefly, ion plasma deposition comprises placing a consumable cathode formed of a coating material into a vacuum environment within a vacuum chamber, providing a substrate 110 within the vacuum environment, supplying a current to the cathode to form a cathodic arc upon a cathode surface resulting in arc-induced erosion of coating material from the cathode surface, and depositing the coating material from the cathode upon the substrate surface 112.

Non-limiting examples of a coating deposited using ion plasma deposition include structural coatings, as well as bond coatings and oxidation-resistant coatings, as discussed in greater detail below with reference to US Patent No. 5,626,462, Jackson et al., "Double-wall airfoil." For certain hot gas path components 100, the structural coating comprises a nickel-based or cobalt-based alloy, and more particularly comprises a superalloy or a (Ni,Co)CrAlY alloy. For example, where the substrate material is a Ni-base superalloy containing both γ and γ' phases, structural coating may comprise similar compositions of materials, as discussed in greater detail below with reference to US Patent No. 5,626,462.

For other process configurations, a structural coating is deposited by performing at least one of a thermal spray process and a cold spray process. For example, the thermal spray process may comprise combustion spraying or plasma spraying, the combustion spraying may comprise high velocity oxygen fuel spraying (HVOF) or high velocity air fuel spraying (HVAF), and the plasma spraying may comprise atmospheric (such as air or inert gas) plasma spray, or low pressure plasma spray (LPPS, which is also known as vacuum plasma spray or VPS). In one non-limiting example, a (Ni,Co)CrAlY coating is deposited by HVOF or HVAF. Other example techniques for depositing the structural coating include, without limitation, sputtering, electron beam physical vapor deposition, electroless plating, and electroplating.

For certain configurations, it is desirable to employ multiple deposition techniques for depositing structural and optional additional coating layers. For example, a first structural coating layer may be deposited using an ion plasma deposition, and a subsequently deposited layer and optional additional layers (not shown) may be deposited using other techniques, such as a combustion spray process or a plasma spray process. Depending on the materials used, the use of different deposition techniques for the coating layers may provide benefits in properties, such as, but not restricted to strain tolerance, strength, adhesion, and/or ductility.

The grooves 132 may be formed using a variety of techniques. Example techniques for forming the groove(s) 132 include abrasive liquid jet, plunge electrochemical machining (ECM), electric discharge machining (EDM) with a spinning electrode (milling EDM), and laser machining. Example laser machining techniques are described in commonly assigned, US Patent Application Ser. No. 12/697,005, "Process and system for forming shaped air holes" filed January 29, 2010, which is incorporated by reference herein in its entirety. Example EDM techniques are described in commonly assigned US Patent Application Ser. No. 12/790,675, "Articles which include chevron film cooling holes, and related processes," filed May 28, 2010, which is incorporated by reference herein in its entirety.

For particular processes, the grooves are formed using an abrasive liquid jet 160 (FIG. 6). Example water jet drilling processes and systems are provided in commonly assigned US Patent Application Ser. No. 12/790,675, "Articles which include chevron film cooling holes, and related processes," filed May 28, 2010, which is incorporated by reference herein in its entirety. As explained in US Patent Application Ser. No. 12/790,675, the water jet process typically utilizes a high-velocity stream of abrasive particles (e.g., abrasive "grit"), suspended in a stream of high pressure water. The pressure of the water may vary considerably, but is often in the range of about 35-620 MPa. A number of abrasive materials can be used, such as garnet, aluminum oxide, silicon carbide, and glass beads. Beneficially, the capability of abrasive liquid jet machining techniques facilitates the removal of material in stages to varying depths, with control of the shaping. This allows the interior access holes 140 feeding the channel to be drilled either as a straight hole of constant cross section, a shaped hole (elliptical etc.), or a converging or diverging hole as shown.

In addition, and as explained in US Patent Application Ser. No. 12/790,675, the water jet system can include a multi-axis computer numerically controlled (CNC) unit 210 (FIG. 6). The CNC systems themselves are known in the art, and described, for example, in U.S. Patent Publication 1005/0013926 (S. Rutkowski et al), which is incorporated herein by reference. CNC systems allow movement of the cutting tool along a number of X, Y, and Z axes, as well as rotational axes.

More particularly, each groove 132 may be formed by directing the abrasive liquid jet 160 at a lateral angle relative to the surface 112 of the substrate 110 in a first pass of the abrasive liquid jet 160 and then making a subsequent pass at an angle substantially opposite to that of the lateral angle, such that each groove narrows at the opening 136 of the groove and thus comprises a re-entrant shaped groove. Typically, multiple passes will be performed to achieve the desired depth and width for the groove. This technique is described in commonly assigned, US Patent Application Ser. No. 12/943,624, Bunker et al., "Components with re-entrant shaped cooling channels and methods of manufacture," which is incorporated by reference herein in its entirety. In addition, the step of forming the re-entrant shaped grooves 132 may further comprise performing an additional pass where the abrasive liquid jet 160 is directed toward the base 134 of the groove 132 at one or more angles between the lateral angle and a substantially opposite angle, such that material is removed from the base 134 of the groove 132.

As indicated in FIGS. 3-5, for example, the manufacturing method may further include forming one or more access holes 140 through the base 134 of a respective one of the grooves 132 to connect the respective groove 132 in fluid communication with the respective hollow interior space 114. It should be noted that the access holes 140 are holes and are thus not coextensive with the channels 130, as indicated in FIG. 4, for example. Example techniques for forming the access holes are described in commonly assigned, US Patent Application Ser. No. 13/210,697, Bunker et al., "Components with cooling channels and methods of manufacture," which is incorporated by reference herein in its entirety.

Beneficially, the metallurgical bond between the substrate and the laser clad material will be stronger than that associated, for example, with a coating like NiCrAlY deposited by a thermal plasma method. Thus, if a thermal plasma coating is applied over the laser cladding material, issues of insufficient strength in the thermal plasma coating will be reduced or eliminated. In addition, the laser clad material need only be deposited in the localized region over each channel, not over the entire substrate surface.

Another method of manufacture is described with reference to FIGS. 2-13. As indicated, for example, in FIGS. 2 and 6, the method of manufacture comprises forming one or more grooves 132 in an outer surface 112 of a substrate 110. As indicated, for example, in FIGS. 4 and 5, each groove 132 has an opening 136 and extends at least partially along the outer surface 112 of the substrate 110. As shown in FIG. 2, the substrate 110 has an inner surface 116 that defines at least one hollow, interior space 114. The substrate is described in more detail above. For the example arrangements shown in FIG. 3, 4, and 7-16, each groove 132 narrows at the respective opening 136 thereof, such that each groove 132 comprises a re-entrant shaped groove 132. The formation of re-entrant-shaped grooves is described above and in commonly assigned, US Patent Application Ser. No. 12/943,624, Bunker et al., "Components with re-entrant shaped cooling channels and methods of manufacture."

As indicated, for example, in FIG. 12 and 13, the manufacturing method further includes processing the outer surface 112 of the substrate 110 to plastically deform the surface in a vicinity of a respective groove 132, such that the distance across the opening 136 is reduced. The resulting processed outer surface 112 is shown, for example, in FIG. 13, and the distance across the top 146 of the groove 132 is reduced as a result of the processing, as indicated in FIGS. 12 and 13. Beneficially, by reducing the distance across the top of the groove, the manufacturing method improves the ability of coatings to bridge the opening directly (that is, without the use of a sacrificial filler). By reducing one of the machining specifications, the manufacturing method may reduce the machining cost for the channels. The distance across the top of the groove will vary based on the specific application. However, for certain configurations, the distance across the top 146 of the groove 132 is in a range of about 8 - 25 mil (0.2 - 0.6 mm) prior to processing the intermediate surface 112, 55 of the component 100, and the distance across the top 146 of the groove 132 is in a range of about 0 - 15 mil (0-0.4 mm) after the intermediate surface 112, 55 has been processed.

As discussed in commonly assigned, US Patent Application, Ser. No. 13/242,179, Bunker et al., "Components with cooling channels and methods of manufacture, which is incorporated by reference herein in its entirety, suitable techniques for processing the outer surface 112 of the substrate 110 include, without limitation, shot peening, water peening, flapper peening, gravity peening, ultrasonic peening, burnishing, and laser shock peening. A variety of burnishing techniques may be employed, depending on the material being surface treated and on the desired deformation. Non-limiting examples of burnishing techniques include plastically massaging the intermediate surface of the component, for example using rollers, pins, or balls, and low plasticity burnishing.

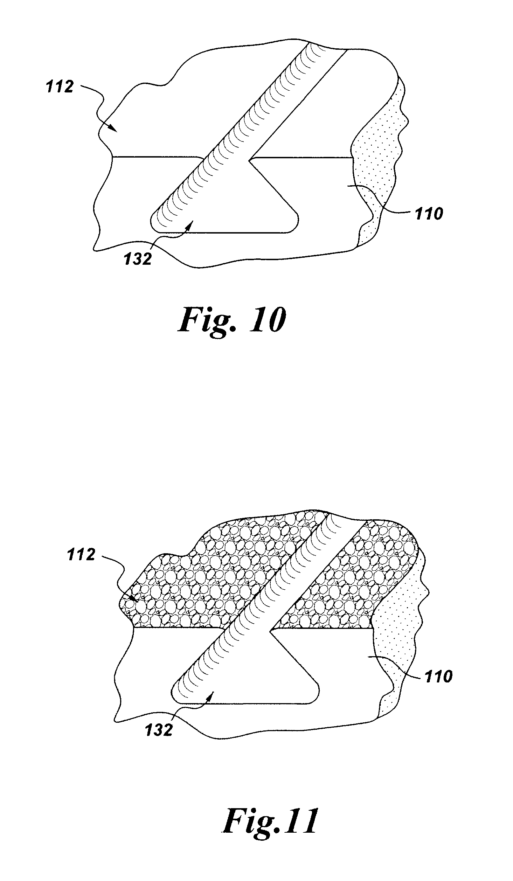

For particular processes, the surface treatment introduces a number of surface irregularities in the outer surface 112 of the substrate 110, as indicated for example, in FIG. 11. For example, the outer surface 112 of the substrate 110 may be processed by shot peening, which typically introduces a number of surface irregularities in the outer surface 112 of the substrate 110. Beneficially, a more natural depression is present from the peening operation, which can be "filled" by the laser cladding material to provide a more uniform surface result.

For particular processes, the step of processing the outer surface 112 of the substrate 110 also facets the outer surface 112 in the vicinity of the groove 132. As used herein, "faceting" should be understood to tilt the intermediate surface in the vicinity of the groove inward, as indicated, for example, in the circled regions in FIG. 13. Beneficially, tilting the intermediate surface inward in the vicinity of the groove will aid the directionality and buildup of the laser cladding from each side of the channel, thus improving bridging of the laser cladding over the groove opening (without the use of a sacrificial filler), such that the mechanical specifications for the groove opening may be relaxed, facilitating the use of a larger water jet nozzle to form the grooves. This would reduce the time needed to for the grooves as well as the associated machining cost.

As discussed above with reference to FIGS. 7-9, the manufacturing method further includes using a laser cladding process to apply a laser clad material 190 over the opening 136 of the respective one or more grooves 132, to at least partially define one or more channels 130 for cooling the component 100. In this manner, a fully dense, local cladding may be metallurgically bonded to the substrate. In addition, as indicated in FIGS. 4, 5 and 14, the manufacturing method further includes disposing a coating 150 over at least a portion of the outer surface 112 of the substrate 110 and over the fully dense, laser clad material 190. Example coating materials and deposition techniques are provided above.

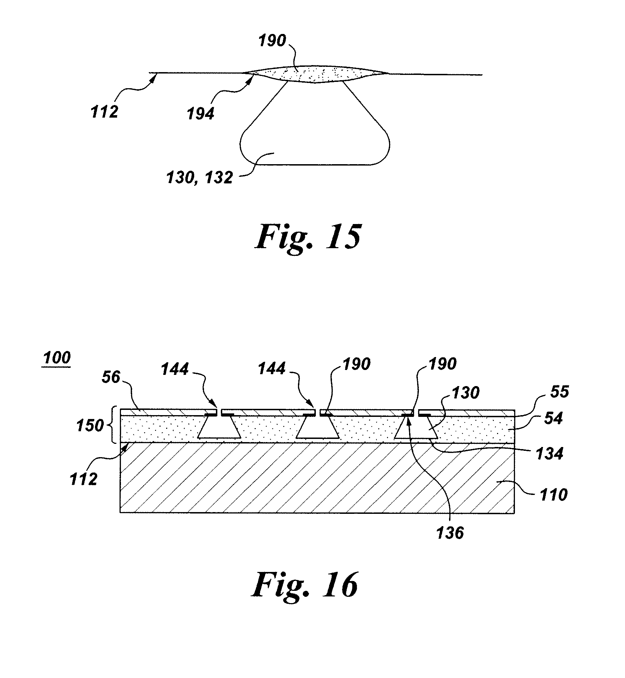

Another method of manufacture is described with reference to FIGS. 2-13, 16. As indicated, for example, in FIG. 16, the method of manufacture comprises depositing an inner layer of a structural coating 54 on an outer surface 112 of a substrate 110 and forming one or more grooves 132 at least partially in the inner structural coating 54. It should be noted, that although the grooves shown in FIG. 16 do not extend into the substrate 110, for other configurations the grooves extend through the inner layer 54 of the structural coating and extend into the substrate 110. Details of the formation of grooves using a two layer structural coating are provided in commonly assigned US Patent Application Ser. No. 12/966,101, Bunker et al., "Method of fabricating a component using a two-layer structural coating," which is incorporated by reference herein in its entirety. For the arrangement shown in FIG. 16, the grooves 132 are re-entrant grooves.

Similar to the arrangements described above with reference to FIGS. 4 and 5, each groove 132 has an opening 136 and extends at least partially along the component 100. As shown in FIG. 2, the substrate 110 has an inner surface 116 that defines at least one hollow, interior space 114. The substrate is described in more detail above.

Similar to the methods described above with reference to FIGS. 7-9, the manufacturing method further includes using a laser cladding process to apply a laser clad material 190 over the opening 136 of the respective one or more grooves 132, to at least partially define one or more channels 130 for cooling the component 100. In this manner, a fully dense, local cladding may be metallurgically bonded to the inner layer 54 of the structural coating.

For particular configurations, the structural coating comprises a first material, and the laser clad material 190 is applied by applying a laser to the first material in powdered form. For example configurations, the first material may comprise a nickel-based or cobalt-based alloy, and more particularly may comprise a superalloy or a (Ni,Co)CrAlY alloy, as described above with reference to US Patent No. 5,626,462, Melvin R. Jackson et al. The laser clad material would then comprise the same material, but initially would be in a powdered form prior to the laser cladding. As discussed above, the structural coating is typically deposited by ion plasma deposition or electron beam vapor deposition. For some applications, thermal spray coatings may be applied. For alternate configurations, the inner layer 54 of the structural coating comprises a first material and the laser clad material 190 comprises a second material in a powdered form, where the first and second materials are different materials. For these multi-material configurations (not shown), typically the bond coat is disposed directly on the laser cladding material 190, and there is no outer layer of the structural coating.

For the arrangement shown in FIG. 16, the manufacturing method further includes disposing an outer layer of the structural coating 56 over at least a portion of the inner layer 54 of the structural coating and over the laser clad material 190. The outer layer 56 of the structural coating may be deposited using the materials and deposition techniques described above for the structural coating 150.

For particular processes illustrated by FIGS. 12 and 13, the manufacturing method further optionally includes processing the outer surface 55 of the inner layer 54 of the structural coating to plastically deform the surface 55 in a vicinity of a respective groove 132, such that the distance across the opening 136 is reduced. This surface processing is performed prior to the laser cladding process. Example surface treatments are discussed above with reference to US Patent Application, Ser. No. 13/242,179, Bunker et al., including, without limitation, shot peening, water peening, flapper peening, gravity peening, ultrasonic peening, burnishing, and laser shock peening.

A component 100 embodiment of the invention is described with reference to FIGS. 2-4, 8, 9, 11, 13, and 16. As indicated, for example, in FIG. 2, the component 100 includes a substrate 110 with an outer surface 112 and an inner surface 116, where the inner surface 116 defines at least one hollow, interior space 114. As indicated, for example, in FIG. 16, the component 100 includes at least one coating 150 disposed over at least a portion of the surface 112 of the substrate 110, where the coating 150 comprises an inner structural coating layer 54 disposed on the outer surface 112 of the substrate 110. As indicated in FIG. 16, one or more grooves 132 are formed at least partially in the inner structural coating layer 54. As noted above, although the grooves shown in FIG. 16 do not extend into the substrate 110, for other configurations the grooves extend through the inner layer 54 of the structural coating and extend into the substrate 110. Similar to the arrangement shown in FIG. 4, each groove 132 extends at least partially along the component 110 and has an opening 136. For the arrangement shown in FIG. 16, the grooves 132 are re-entrant grooves. Similar to the arrangement shown in FIG. 3, one or more access holes 140 are formed through the base 134 of a respective groove 132, to connect the groove 132 in fluid communication with the respective hollow interior space 114.

As indicated in FIG. 16, the component 100 further includes a laser clad material 190 disposed over the opening 136 of the respective one or more grooves 132, to at least partially define one or more channels 130 for cooling the component 100. Example laser clad materials are provided above. For the configuration shown in FIG. 16, the coating 150 further comprises an outer structural coating layer 56 disposed on the inner structural coating layer 54, where the outer layer of the structural coating 56 is disposed over at least a portion of the inner layer 54 of the structural coating and over the laser clad material 190. For certain configurations, the structural coating 54, 56 and the laser clad material 190 comprise the same material. For alternative configurations (not shown), the coating does not include an outer layer 56 of the structural coating, the inner layer 54 of the structural coating and the laser clad material 190 comprise different, compatible, materials, and the bond coat is disposed over the laser clad material.

For particular configurations, the laser clad material 190 seals the opening 136, similar to the arrangement shown in FIG. 8. For other configurations, the laser clad material 190 does not completely seal the opening 136, as shown, for example in FIGS. 9 and 16.

For particular configurations, a number of surface irregularities are formed in the outer surface 55 of the inner layer 54 of the structural coating in the vicinity of the respective groove 132, as indicated in FIG. 11, for example. For particular configurations, the outer surface 55 of the inner layer 54 of the structural coating is faceted in a vicinity of the respective groove 132. As explained above, "faceting" should be understood to tilt the surface 55 in the vicinity of the groove 132 inward, as indicated, for example, in the circled regions in FIG.13.

Beneficially, the above described methods provide a high strength metallurgical bond to assure the durability of the micro-channels and subsequently deposited coating system, for the resulting micro-channel cooled components.

Although only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method of manufacture of a component (100) comprising:
forming one or more grooves (132) in an outer surface (112) of a substrate (110), wherein each groove (132) has a base (134) and an opening (136) and extends at least partially along the outer surface (112) of the substrate (110), and wherein the substrate (110) has an inner surface (116) that defines at least one hollow, interior space (114);
processing the outer surface (112) of the substrate (110) to plastically deform the surface (112) in a vicinity of a respective groove (132), such that the distance across the opening (136) is reduced;
using a laser cladding process to apply a laser clad material (190) over the opening (136) of the respective one or more grooves (132), to at least partially define one or more channels (130) for cooling the component (100); and
disposing a coating (152,154) over at least a portion of the outer surface (112) of the substrate (110) and over the laser clad material (190).

2. The manufacturing method of Claim 1, wherein processing the outer surface (112) of the substrate (110) comprises performing one or more of shot peening the outer surface (112), water jet peening the outer surface (112), flapper peening the outer surface (112), gravity peening the outer surface (112), ultrasonic peening the outer surface (112), burnishing the outer surface (112), low plasticity burnishing the outer surface (112), and laser shock peening the outer surface (112), to plastically deform the surface (132) adjacent the groove (132), such that the distance across the opening of the groove (132) is reduced, and wherein the processing introduces a plurality of surface irregularities in the outer surface (112) of the substrate (110).

3. The manufacturing method of Claim 1 or 2, wherein each groove (136) is formed by directing an abrasive liquid jet (160) at a lateral angle relative to the surface (112) of the substrate (110) in a first pass of the abrasive liquid jet (160) and then making a subsequent pass at an angle substantially opposite to that of the lateral angle, such that each groove (132) narrows at the opening (136) of the groove (132) and thus comprises a re-entrant shaped groove (132).

4. The manufacturing method of Claim 3, wherein the step of forming the re-entrant shaped grooves (132) further comprises performing at least one additional pass where the abrasive liquid jet (160) is directed toward a base (134) of the groove (132) at one or more angles between the lateral angle and the substantially opposite angle, such that material is removed from the base (134) of the groove (132).

5. The manufacturing method of any preceding Claim, further comprising forming one or more access holes (140) through the base (134) of a respective one of the grooves (132) to connect the respective groove (132) in fluid communication with respective ones of the at least one hollow interior space (114).

6. The manufacturing method of any preceding Claim, further comprising casting the substrate (110) prior to forming the one or more grooves (132) in the outer surface (112) of the substrate (110).

7. The manufacturing method of any preceding Claim, wherein the substrate comprises a first material and the laser clad material (190) is applied by applying a laser to a powder comprising the first material.

8. The manufacturing method of any preceding Claim, wherein the substrate (110) comprises a first material and the laser clad material (166) is applied by applying a laser to a second material in a powdered form, wherein the first and second materials are different materials.

9. The manufacturing method of any preceding Claim, wherein the laser clad material seals the opening or does not completely seal the opening.

10. The manufacturing method of any preceding Claim, wherein the distance across the opening (136) of the groove (132) is in a range of about 0.2 - 0.6 mm prior to processing the outer surface (112) of the substrate (110), and wherein the distance across the opening (136) of the groove (132) is in a range of about 0 - 0.4 mm after the outer surface (112) has been processed.

11. The manufacturing method of any preceding Claim, wherein the step of processing the outer surface (112) of the substrate (110) also facets the outer surface (112) in a vicinity of the groove (132).

12. The manufacturing method of any preceding claim, further comprising:
depositing an inner layer (54) of a structural coating on the outer surface (112) of the substrate (110); and
forming the or more grooves (132) at least partially in the inner structural coating (54), and wherein disposing a coating comprises
disposing an outer layer (56) of the structural coating over at least a portion of the inner layer of the structural coating (54) and over the laser clad material (190).

13. A component comprising:
a substrate (110) comprising an outer surface (112) and an inner surface (116), wherein the inner surface (116) defines at least one hollow, interior space (114);
at least one coating (54,56) disposed over at least a portion of the surface (112) of the substrate (110), wherein the coating comprises an inner structural coating layer (54) disposed on the outer surface (112) of the substrate (110), wherein one or more grooves (132) are formed at least partially in the inner structural coating layer (54), wherein each groove (132) extends at least partially along the component (100) and has an opening, (136) and wherein one or more access holes (140) are formed through the base (134) of a respective groove (132), to connect the groove (132) in fluid communication with the respective hollow interior space (114); and
a laser clad material (190) disposed over the opening (136) of the respective one or more grooves (132), to at least partially define one or more channels (130) for cooling the component (100).

14. The component of Claim 13, wherein each of the respective one or more grooves (132) narrows at the respective opening (136) thereof, such that each groove (132) comprises a re-entrant shaped groove (132).

15. The component of Claim 13 or 14, wherein the coating further comprises an outer structural coating layer (56) disposed on the inner structural coating layer (54), and wherein the outer layer (56) of the structural coating is disposed over at least a portion of the inner layer of the structural coating (54) and over the laser clad material (190).

16. The component of Claim 15, wherein the structural coating (54,56) and the laser clad material (190) comprise the same material.

17. The component of any of Claims 13 to 16, further comprising a bond coat (152), wherein the inner layer of the structural coating (54) comprises a first material (190) and the laser clad material comprises a second material in a powdered form, wherein the first and second materials are different materials, and wherein the bond coat (152) is disposed over the laser clad material (190).

18. The component of any of Claims 13 to 17, wherein the laser clad material (190) seals the opening (136) or does not completely seal the opening (136).

19. The component of any of Claims 13 to 18, wherein a plurality of surface irregularities are formed in the outer surface (55) of the inner layer of the structural coating (54) in the vicinity of the respective groove (132).

20. The component of any of Claims 13 to 19, wherein the outer surface (55) of the inner layer of the structural coating (54) is faceted in a vicinity of the respective groove (132).
